# EUROPÄISCHE PATENTSCHRIFT

(11) **EP 2 596 989 B1**
(45) Veröffentlichungstag und Bekanntmachung des Hinweises auf die Patenterteilung: **07.03.2018**
(21) Anmeldenummer: 12193515.9
(22) Anmeldetag: 21.11.2012
(51) Int. Cl.: B60Q 1/12

(54) **VORRICHTUNG UND VERFAHREN ZUR ERMITTELUNG VON FÜHRUNGSGRÖSSEN ZUR ANPASSUNG DER LICHTVERTEILUNG EINES RECHTEN SCHEINWERFERS UND EINES LINKEN SCHEINWERFERS BEI KURVENFAHRTEN**
DEVICE AND METHOD FOR DETERMINING REFERENCE VARIABLES FOR ADJUSTING THE LIGHT DISTRIBUTION OF A RIGHT HEADLAMP AND A LEFT HEADLAMP ON CURVED ROADS
DISPOSITIF ET PROCÉDÉ DE DÉTERMINATION DE VARIABLES POUR ADAPTER LA RÉPARTITION DE LUMIÈRE D'UN PHARE DROIT ET D'UN PHARE GAUCHE DANS LES VIRAGES

(30) Priorität: 22.11.2011 DE 102011055597
(43) Veröffentlichungstag der Anmeldung: 29.05.2013
(73) Patentinhaber: HELLA GmbH & Co. KGaA, 59552 Lippstadt (DE)
(72) Erfinder: Schmidt, Jürgen, 33106 Paderborn (DE); Irmscher, Tobias, 33324 Gütersloh (DE); Kubitza, Boris, 59159 Möhnesee-Körbecke (DE); Wilks, Carsten, 59555 Lippstadt (DE); Krauß, Andreas, 59597 Erwitte (DE)

(56) Entgegenhaltungen:
- EP-A2- 1 193 125
- DE-A1- 10 221 902
- US-A1- 2006 028 832
- US-A1- 2008 101 076

## Beschreibung

Die Erfindung betrifft eine Vorrichtung zur Ermittelung von Führungsgrößen zur Anpassung der Lichtverteilung eines rechten Scheinwerfers (S_{R}) und/oder eines linken Scheinwerfers (S_{L}) eines Fahrzeugs (F) bei Kurvenfahrten, wobei die Führungsgrößen aus einem ersten Winkel gegenüber einer Fahrzeuglängsachse und/oder einem zweiten Winkel gegenüber der Fahrzeuglängsachse des Fahrzeugs (F) ermittelbar sind, der erste Winkel aus ersten Informationen ermittelbar ist und der zweite Winkel aus zweiten Informationen ermittelbar ist
- mit wenigstens einer Schnittstelle zum Einlesen der ersten Informationen, nämlich von Messwerten und/oder mittels Aktoren des Fahrzeugs einzustellender Größen, wie zum Beispiel der Geschwindigkeit, des Lenkwinkels, der Gierrate, des Einschlagswinkels der Vorderräder, der Entfernung zu einem vorausfahrenden und/oder entgegenkommenden Fahrzeug, und zum Einlesen der zweiten Informationen über einen vor dem Fahrzeug liegenden Straßenverlauf, wie zum Beispiel der Radius der gerade durchfahrenen Kurve, der Entfernung zu einem markanten Punkt des Straßenverlaufs wie einem Kurvenanfangspunkt, einem Kurvenendpunkt, einem Kurvenwendepunkt, dem Beginn oder Ende einer Straße, eines Ausbauabschnittes einer Straße, einer Autobahn, einer innerörtlichen oder außerörtlichen Straße,
- mit einem Steuerungsmittel zum Ermitteln des ersten Winkels aus den ersten Informationen und des zweiten Winkels aus den zweiten Informationen,
- wobei mit dem Steuerungsmittel für jeden der Scheinwerfer einer der Winkel auswählbar ist,
- mit einer Schnittstelle zur Verbindung der Vorrichtung mit Aktoren zum Anpassen der Lichtverteilung der Scheinwerfer oder von Teilen der Scheinwerfer, an welcher Führungsgrößensignale bereitstellbar sind, und
- mit einem Mittel zum Wandeln des vom Steuerungsmittel für den rechten Scheinwerfer ausgewählten Winkels und des vom Steuerungsmittel für den linken Scheinwerfer ausgewählten Winkels in die Führungsgrößensignale.

Aus der Vergangenheit sind Vorrichtungen zur Steuerung des Schwenkens eines Lichtkegels eines rechten Scheinwerfers und eines linken Scheinwerfers eines Fahrzeugs basierend auf den ersten Informationen, wie zum Beispiel basierend auf der Geschwindigkeit, der Gierrate und dem Lenkradwinkel bekannt (dynamisches Kurvenlicht). Diese Vorrichtungen verbessern sowohl die Ausleuchtung als auch die Sichtweite auf kurvenreichen Strecken. Die Verwendung von ersten Informationen, auch als Fahrzeuginformationen bezeichnet, stellt sich heute speziell bei Kurvenein- und Ausfahrten als nachteilig dar, da der Schwenkwinkel der Scheinwerfer erst dann dynamisch eingestellt wird, wenn sich das Fahrzeug bereits in der Kurvenein- oder - ausfahrt befindet.

Zur Verbesserung wurde das sogenannte prädiktive Kurvenlicht entwickelt, bei dem die zweiten Informationen genutzt werden, um vorausschauend die Schwenkrichtung des Lichtkegels der Scheinwerfer einzustellen. Das prädiktive Kurvenlicht beseitigt die Probleme des dynamischen Kurvenlichtes, die zum Beispiel bei der Kurveneinfahrt oder der Kurvenausfahrt entstehen können, da an den Scheinwerfer des prädiktiven Kurvenlichtes stets der prädiktive Schwenkwinkel eingestellt ist.

Heute bekannte Verfahren können bei fehlerhaften Straßenverlaufsinformationen eine maximale Fehlstellung der prädiktiv verschwenkten Scheinwerfer verursachen. Die Folgen sind eine erhöhte Gefahr der Blendung entgegenkommender Verkehrsteilnehmer, eine nicht ideale Ausleuchtung der eigenen Fahrbahn und ein steigendes Unfallrisiko, da der Fahrer durch eine unter Umständen sehr große Fehlstellung der Scheinwerfer unnötig irritiert und abgelenkt wird.

Weiterhin ist es bei heute bekannten Verfahren möglich, dass es bei den Übergängen zwischen rein dynamischem Schwenken und rein prädiktivem Schwenken zu einer Kreuzung ("schielen") der Lichtkegel auf der Straße kommen kann. Dieser Effekt wird aus optischen Gründen nicht gewünscht.

Ein weiterer Nachteil bei heute bekannten Verfahren besteht darin, dass der Fahrer anders als beim dynamischen Kurvenlicht bei prädiktivem Schwenken kein Einfluss mehr auf die Schwenkrichtung der Scheinwerfer ausüben kann. In der Praxis kann dies bedeuten, dass der prädiktiv verschwenkte Scheinwerfer seinen maximal möglichen Schwenkwinkel oft schon erreicht, bevor der Fahrer in eine Kurve einfährt. D.h. in dem Moment, wo der Fahrer das Lenkrad bewegt, erfolgt keine Reaktion mehr im Lichtbild, da die Scheinwerfer ihren maximal möglichen Schwenkwinkel bereits durch die prädiktive Verschwenkung erreicht haben. Dies ist ungewohnt für den Fahrer und könnte die Akzeptanz des Systems verringern.

Ferner sind Vorrichtungen bekannt, mit denen sowohl ein dynamischer als auch ein prädiktiver Schwenkwinkel eingestellt werden kann. Eine derartige Vorrichtung ist zum Beispiel aus dem Dokument DE 10 2005 036 948 A1 bekannt. In dem Dokument DE10 2005 036 948 A1 werden zweite Informationen wie Kurvenkrümmung und/oder Kurvenradius und/oder Kurvenrichtung zusammen mit ersten Informationen, zum Beispiel der aktuellen Geschwindigkeit und/oder dem aktuellen Lenkradwinkel verwendet, um prädiktive und dynamische Schwenkwinkel zu bestimmen. Zusätzlich werden statische und/oder entfernungsabhängige und/oder geschwindigkeitsabhängige Start- und Endpunkte von Kurven als Steuerungshilfen für die Aktivierung/Deaktivierung bzw. Übergänge zwischen der Einstellung des dynamischen bzw. der prädiktiven Schwenkwinkels benötigt. Das Dokument DE 10 2005 036 948 zeigt u.a. mehrere Möglichkeiten auf, wie verschiedene prädiktive und dynamische Schwenkwinkel für die Scheinwerfer ausgewählt werden können. Bei einer Möglichkeit wird der prädiktive Schwenkwinkel zunächst unbegrenzt vorgegeben. Erreicht der dynamische Schwenkwinkel z. B. nach einer definierten Zeit nicht den prädiktiven Schwenkwinkel, wird der prädiktive Schwenkwinkel sukzessiv auf den dynamischen Schwenkwinkel reduziert, d. h. begrenzt. Der so sukzessiv begrenzte prädiktive Schwenkwinkel wird als Führungsgröße an die Scheinwerfer gegeben.

Die EP 1 193 125 A2 offenbart eine Vorrichtung, bei der sowohl ein prädiktiver Winkel aufgrund von Informationen über den vor dem Fahrzeug liegenden Straßenverlauf als auch ein dynamischer Winkel aufgrund des Lenkeinschlags berechnet wird. Die Scheinwerfer werden solange gemäß dem prädiktiven Winkel eingestellt, bis der dynamische Winkel größer ist als der prädiktive Winkel. Dann erfolgt ein Wechsel auf den dynamischen Winkel. Wenn der dynamische Winkel wieder kleiner als der prädiktive Winkel ist, wird wieder der prädiktive Winkel eingestellt.

Die US 2006/028832 A1 offenbart eine Vorrichtung, bei der eine Einstellung des Scheinwerfers von Informationen abhängig ist, die aus einem Navigationsgerät erhalten werden.

Nachteile dieses Verfahrens und auch anderer Verfahren und Vorrichtungen für Kombinationen von dynamischem und prädiktivem Kurvenlicht sind:
- Ist der prädiktive Schwenkwinkel fehlerhaft, dann wird der prädiktive Schwenkwinkel zunächst immer mit einem möglicherweise maximalen Fehler ausgewählt und in eine Führungsgröße für den Scheinwerfer gewandelt. Eine Korrektur erfolgt erst dann, wenn der dynamische Schwenkwinkel sich nicht innerhalb einer definierten Zeit dem prädiktiven Schwenkwinkel annähert. Bis dieses erfolgt, steht dem Fahrer insbesondere im maximalen Fehlerfall weniger Licht zur Verfügung, als eigentlich möglich.
- Der Fahrer hat keine Möglichkeit, bei ausgewählten prädiktiven Schwenkwinkeln, insbesondere beim Einfahren in die Kurve bzw. Herausfahren aus der Kurve sowie bei Korrekturbewegungen (z. B. beim Ausweichen wegen einem Hindernis) innerhalb einer Kurve den eingestellten Schwenkwinkel mittels Lenkradbewegung noch etwas weiter in die Kurve hinein- bzw. herauszubewegen. Er hat also keinen Einfluss auf das Licht auf der Straße vor ihm und speziell in Gefahrensituationen, in denen der Fahrer vom prädizierten Streckenverlauf abweichen muss, befindet sich das Licht nicht dort, wo es der Fahrer benötigt, sondern in der prädizierten Fahrtrichtung.

Hier setzt die vorliegende Erfindung an.

Der vorliegenden Erfindung liegt dass Problem zugrunde, das prädiktive Anpassen der Lichtverteilung der Scheinwerfer eines Kraftfahrzeugs so zu verbessern, dass einerseits Fehler der Prädiktion sich nicht unbegrenzt auswirken können und andererseits der Fahrer in besonderen Fahrsituationen Einfluss auf die Anpassung der Lichtverteilung nehmen kann.

Das Anpassen der Lichtverteilung kann einerseits durch das Schwenken eines Scheinwerfers oder eines Teils eines Scheinwerfers erfolgen. Als Leuchtmittel können in Scheinwerfern auch Leuchtdioden vorgesehen sein, die zu einem sogenannten Leuchtdiodenarray verschaltet sind. Durch Ein- oder Ausschalten von einzelnen Leuchtdioden oder von Gruppen von Leuchtdioden eines solchen Leuchtdiodenarrays kann die Lichtverteilung des von solchen Scheinwerfern ausgestrahlten Lichtes verändert werden. Ein Schwenken findet dann nicht statt. Die Erfindung erstreckt sich sowohl auf Scheinwerfer mit herkömmlichen Leuchtmitteln als auch auf Scheinwerfer mit Leuchtdiodenarrays. In Bezug auf die Erfindung wird daher nicht auf das Schwenken von Scheinwerfer oder von Teilen eines Scheinwerfers abgestellt. Ebenso wenig wird in Bezug auf die Erfindung nicht von einer Schwenkrichtung oder von einem Schenkwinkel gesprochen, da diese Begriffe in Bezug auf Scheinwerfer mit Leuchtdiodenarrays irreführend sein können.

Das der Erfindung zugrunde liegende Problem wird erfindungsgemäß dadurch gelöst, dass mittels des Steuerungsmittels der zweite Winkel p auf einen begrenzten zweiten Winkel p_{L} begrenzbar ist, wenn ein Betrag |a| einer Abweichung a=p-d zwischen dem zweiten Winkel p und dem ersten Winkel d größer ist als eine maximal zulässige Abweichung aₘₐₓ.

Die Richtungen und Vorzeichen von Winkeln, Schwenkbewegungen entsprechen den Definitionen in der DIN ISO 4130. Demnach werden Winkel nach links von der Fahrzeuglängsachse mit negativen Vorzeichen und Winkel nach rechts von der Fahrzeuglängsachse mit positiven Vorzeichen angegeben.

Die Begrenzung des zweiten Winkels p erfolgt erfindungsgemäß immer dann, wenn eine mehr als zulässige Abweichung aₘₐₓ des ermittelten zweiten Winkels p von dem ersten Winkel vorliegt. Große Abweichungen liegen häufig dann vor, wenn der zweite Winkel falsch ermittelt worden ist, weil die zweiten Informationen ganz oder teilweise falsch waren. Der Fehler der Ermittelung kann sich bei der Erfindung dann nicht unbegrenzt auswirken und es bleibt gewährleistet, dass der zur Ermittelung der Führungsgröße verwendete begrenzte zweite Winkel im Zusammenhang mit der tatsächlichen Fahrsituation bleibt. Ferner kann der Fahrer bei nicht durch den Straßenverlauf prädizierbaren Fahrmanövern einen verstärkten Einfluss auf die Anpassung der Lichtverteilung gewinnen, da er zum Beispiel durch starke Lenkbewegungen zum Beispiel in der Folge von Ausweichmanövern die Abweichung des zweiten Winkels vom ersten Winkel vergrößern und damit einen durchschlagenden Einfluss des ersten Winkels auf den an den Scheinwerfern einzustellenden Winkel erreichen kann, wie nachfolgend noch erläutert werden wird.

Beim ersten und beim zweiten Winkel handelt es sich um Zwischengrößen oder Variablen, die zunächst nur Berechungszwecken innerhalb der Steuerungsmittels dienen. Lediglich bei herkömmlichen Scheinwerfern können der erste Winkel und der zweite Winkel an den Scheinwerfern einstellbare Winkel zur Fahrzeuglängsachse, die üblicherweise auch als dynamischer Schwenkwinkel oder prädiktiver Schwenkwinkel bezeichnet werden. Der erste Winkel und der zweite Winkel müssen bei der Berechnung innerhalb des Steuerungsmittel auch nicht mit Einheiten versehen sein. Die Bezeichnung des ersten Winkels und des zweiten Winkels als Winkel wurde nur aufgrund der Nähe zum dynamischen Schenkwinkel bzw. prädiktiven Schwenkwinkel gewählt. Ebenso könnte man von einem ersten Wert oder einem zweiten Wert o.ä. sprechen.

Der begrenzte zweite Winkel p_{L} kann dem ersten Winkel d zuzüglich der maximal zulässigen Abweichung aₘₐₓ entsprechen, wenn der zweite Winkel p größer ist als der erste Winkel d. Ist dagegen der zweite Winkel p kleiner als der erste Winkel d, entspricht der begrenzte zweite Winkel p_{L} vorteilhaft dem ersten Winkel d abzüglich der maximal zulässigen Abweichung aₘₐₓ. In beiden Fällen hat der erste Winkel d einen durchschlagenden Einfluss auf den begrenzten zweiten Winkel.

Die maximale zulässige Abweichung kann ein konstanter Wert sein. Es ist ebenso möglich, dass die maximale zulässige Abweichung aₘₐₓ abhängig von ersten Informationen und/oder zweiten Informationen ist. Damit ist eine Anpassung der maximal zulässigen Abweichung an die Fahrsituation und an den prädizierten Straßenverlauf möglich.

Mittels des Steuerungsmittels einer erfindungsgemäßen Vorrichtung kann für den rechten und den linken Scheinwerfer der zweite Winkel p bzw. im Falle einer Begrenzung des zweiten Winkels p der begrenzte zweite Winkel p_{L} als der Winkel ausgewählt werden, der zur Ermittelung der Führungsgrößen verwendet wird. Handelt es sich bei der erfindungsgemäßen zur Ermittelung von Führungsgrößen zur Anpassung der Lichtverteilung von herkömmlichen Scheinwerfern, ist dann an beiden Scheinwerfern der prädiktive Schwenkwinkel p bzw. der begrenzte prädiktive Schwenkwinkel p_{L} eingestellt.

Mittels des Steuerungsmittels einer erfindungsgemäßen Vorrichtung kann für den rechten Scheinwerfer der erste Winkel d und für den linken Scheinwerfer der zweite Winkel bzw. im Falle einer Begrenzung des zweiten Winkels p der begrenzte zweite Winkel p_{L} ausgewählt werden, wenn der zweite Winkel p kleiner ist als der erste Winkel d. Alternativ kann mittels des Steuerungsmittels einer erfindungsgemäßen Vorrichtung für den linken Scheinwerfer der erste Winkel d und für den rechten Scheinwerfer der zweite Winkel p bzw. im Falle einer Begrenzung des zweiten Winkels p der begrenzte zweite Winkel p_{L} ausgewählt werden, wenn der zweite Winkel p größer ist als der erste Winkel d. Es ist also auch möglich, dass an einem der beiden Scheinwerfer der erste Winkel eingestellt wird und an dem anderen der beiden Scheinwerfer der zweite bzw. begrenzte zweite Winkel eingestellt wird. Dieses kann insbesondere bei Kurvenfahrten zu einer breiteren Ausleuchtung des Fahrzeugvorfeldes führen.

Das Steuerungsmittel einer erfindungsgemäßen Vorrichtung kann geeignet und eingerichtet sein, dass zwischen der Auswahl des ersten Winkels d für einen der Scheinwerfer und der Auswahl des zweiten Winkels p bzw. begrenzten zweiten Winkels p_{L} für den gleichen Scheinwerfer gewechselt werden kann, wenn der erste Winkel d gleich dem zweiten Winkel p ist.

Anhand der beigefügten Zeichnungen wird die Erfindung nachfolgend näher erläutert. Dabei zeigt:
- Fig. 1: eine schematische Darstellung eines Fahrzeugs mit einer erfindungsgemäßen Vorrichtung und mit einem rechten und einem linken Scheinwerfer,
- Fig. 2: ein Ablaufdiagramm eines mit der erfindungsgemäßen Vorrichtung durch-führbaren Verfahrens, bei dem an einem Scheinwerfer ein erster Winkel eingestellt wird und an einem anderen ein zweiter bzw. begrenzter zweiter Winkel eingestellt wird, und
- Fig. 3: ein Ablaufdiagramm eines mit der erfindungsgemäßen Vorrichtung durch-führbaren Verfahrens, bei dem an beiden Scheinwerfern ein zweiter bzw. begrenzter zweiter Winkel eingestellt wird.

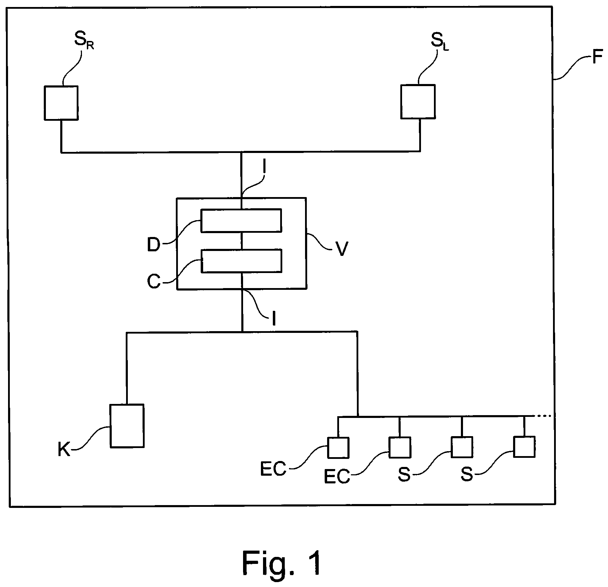

Das in Figur 1 als Block dargestellte Fahrzeug F weist einen rechten Scheinwerfer S_{R} und einen linken Scheinwerfer S_{L} auf. Beide Scheinwerfer weisen vorzugsweise Motoren als Aktoren auf, mit denen die Scheinwerfer horizontal geschwenkt werden können, um die Strahlrichtung der Scheinwerfer horizontal zu schwenken. Es handelt sich um herkömmliche Scheinwerfer, nicht um Scheinwerfer mit LED-Arrays. Damit ist es möglich, die Scheinwerfer S_{R}, S_{L} so zu schwenken, dass es in Richtung der vor dem Fahrzeug liegenden Straße leuchtet. Das Fahrzeug ist also mit so genanntem Kurvenlicht ausgestattet.

Wie bereits einleitend ausgeführt, wird zwischen dem so genannten dynamischen Kurvenlicht und dem so genannten prädiktiven Kurvenlicht unterschieden.

Das dynamische Kurvenlicht berücksichtigt zur Ermittlung der Schwenkrichtung der Scheinwerfer Informationen, die den aktuellen Zustand des Fahrzeugs berücksichtigen, der durch erste Informationen beschrieben wird, die durch Sensoren S und/oder Steuergeräte EC im Fahrzeug zur Verfügung gestellt werden können. Was diese ersten Informationen umfassen können, ist bereits einleitend ausgeführt worden. Ein aufgrund der ersten Informationen ermittelter Schwenkwinkel wird als erster Winkel bezeichnet. Da dieser Winkel an den Scheinwerfern des Ausführungsbeispiels tatsächlich eingestellt wird, wird der erste Winkel nachfolgend als dynamischer Schwenkwinkel d bezeichnet.

Das prädiktive Kurvenlicht berücksichtigt bei der Ermittlung der Schwenkrichtung der Scheinwerfer Informationen, die die vor dem Fahrzeug liegende Straße, insbesondere den Straßenverlauf berücksichtigen. Diese zweiten Informationen können zum Beispiel durch ein Navigationssystem und/oder durch ein Kamerasystem K zur Verfügung gestellt werden. Was diese zweiten Informationen umfassen können, wurde ebenfalls bereits einleitend ausgeführt. Ein aufgrund der zweiten Informationen ermittelter Schwenkwinkel wird als zweiter Winkel bezeichnet. Da dieser Winkel an den Scheinwerfern des Ausführungsbeispiels tatsächlich eingestellt wird, wird der zweite Winkel nachfolgend als prädiktiver Schwenkwinkel p bezeichnet.

Zur Ermittlung des dynamischen Schwenkwinkels d und des prädiktiven Schwenkwinkels p ist in dem Fahrzeug F die erfindungsgemäße Vorrichtung zur Steuerung des Schwenkens eines rechten Scheinwerfers S_{R} und eines linken Scheinwerfers S_{L} eines Fahrzeugs F vorgesehen.

Die erfindungsgemäße Vorrichtung V umfasst eine Schnittstelle I, über die die Vorrichtung V mit dem Kamerasystem K und verschiedenen Steuergeräten EC und Sensoren S verbunden ist. Über die Schnittstelle I können die ersten Informationen bzw. die zweiten Informationen, die von den Steuergeräten EC und/oder Sensoren S bzw. von dem Kamerasystem bereitgestellt werden in die Vorrichtung V eingelesen werden.

In der Vorrichtung ist ein Steuerungsmittel C vorgesehen, welches die ersten Informationen und die zweiten Informationen verarbeitet und aus den ersten Informationen den dynamischen Schwenkwinkel d und aus den zweiten Informationen den prädiktiven Schwenkwinkel p ermittelt. Mit dem Steuerungsmittel C wird außerdem ausgewählt, ob der dynamische Schwenkwinkel d oder der prädiktive Schwenkwinkel p an dem rechten bzw. dem linken Scheinwerfer S_{R}, S_{L} eingestellt werden soll.

In der Vorrichtung ist ferner ein Mittel zum Wandeln des vom Steuerungsmittel C für den rechten Scheinwerfer S_{R} ausgewählten Schwenkwinkels d, p und des vom Steuerungsmittel C für den linken Scheinwerfer S_{L} ausgewählten Schenkwinkels d, p in die Führungsgrößensignale vorgesehen. Die Führungsgrößensignale können über eine weitere Schnittstelle I an die Aktoren der Scheinwerfer S_{R}, S_{L} übermittelt werden. Von den Aktoren werden die Führungsgrößensignale zum Schwenken der Scheinwerfer oder zur Verschiebung des Zwickels z.B. bei LED Systemen entsprechend der ausgewählten Schwenkwinkel d, p verarbeitet.

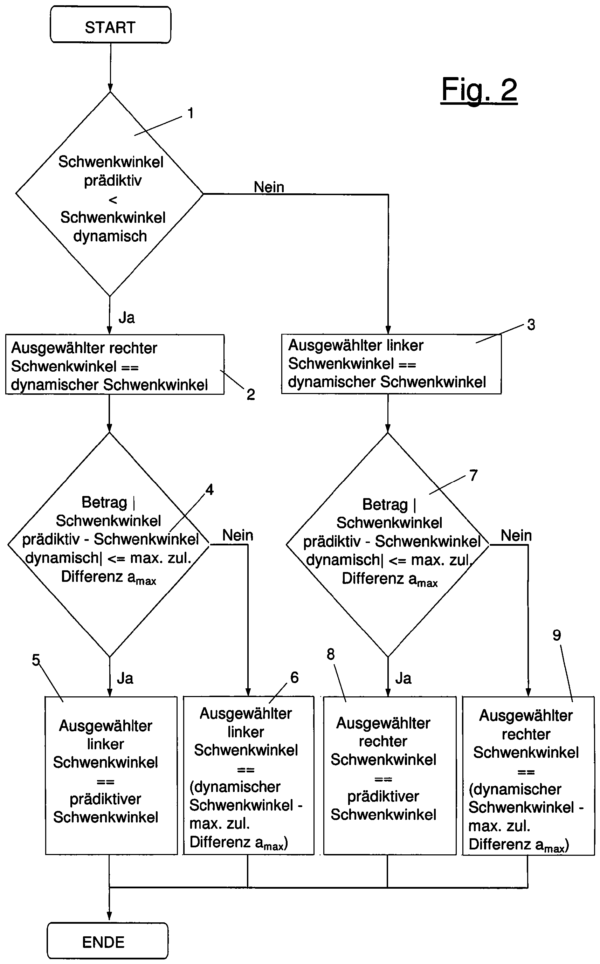

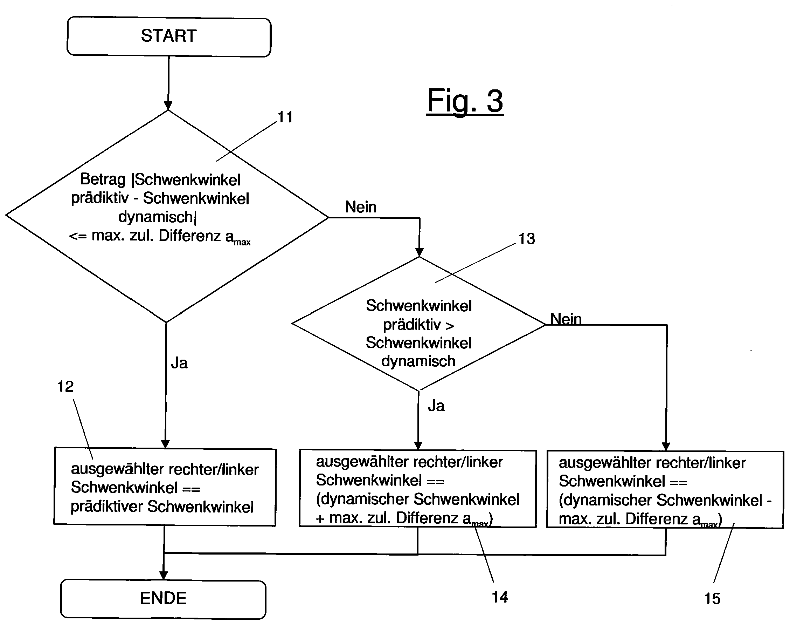

Die Auswahl der Schwenkwinkel erfolgt zum Beispiel nach dem in der Fig. 2 oder dem in der Fig. 3 dargestellten Verfahren.

Nachdem der dynamische Schwenkwinkel und der prädiktive Schwenkwinkel ermittelt worden sind, wird nach den in den Figuren 2 und 3 dargestellten Verfahren ausgewählt, welcher Schwenkwinkel an den Scheinwerfern S_{R}, S_{L} eingestellt werden soll. Außerdem wird ggf. eine Begrenzung des prädiktiven Schwenkwinkels vorgenommen.

Nach dem Start des in Fig. 2 dargestellten Verfahrens wird in einem Schritt 1 zunächst geprüft, ob der prädiktive Schwenkwinkel p kleiner ist als der dynamische Schwenkwinkel. Ist das der Fall wird in einem Schritt 2 für den rechten Scheinwerfer S_{R} der dynamische Schwenkwinkel als einzustellender Schwenkwinkel ausgewählt. Ist das nicht der Fall wird in Schritt 3 für den linken Scheinwerfer S_{L} der dynamische Schwenkwinkel ausgewählt.

Nach dem Schritt 2 erfolgt ist, wird in Schritt 4 geprüft, ob der Betrag |a| der Abweichung a=p-d des prädiktiven Schwenkwinkels p vom dynamischen Schwenkwinkel d kleiner oder gleich eine maximal zulässige Abweichung aₘₐₓ ist. Ist dies der Fall, wird in Schritt 5 für den linken Scheinwerfer der prädiktive Schwenkwinkel als einzustellender Schwenkwinkel ausgewählt. Ist dies nicht der Fall, wird in Schritt 6 für den linken Scheinwerfer ein begrenzt prädiktiver Schwenkwinkel p_{L} bestimmt und ausgewählt, der gleich der Differenz d-aₘₐₓ aus dem dynamischen Schwenkwinkel d und der maximal zulässigen Abweichung aₘₐₓ ist.

Nach dem Schritt 3 erfolgt ist, wird in Schritt 7 ebenso wie in Schritt 4 geprüft, ob der Betrag |a| der Abweichung a=p-d des prädiktiven Schwenkwinkels p vom dynamischen Schwenkwinkel d kleiner oder gleich eine maximal zulässige Abweichung aₘₐₓ ist. Ist dies der Fall, wird in Schritt 8 für den rechten Scheinwerfer der prädiktive Schwenkwinkel als einzustellender Schwenkwinkel ausgewählt. Ist dies nicht der Fall, wird in Schritt 9 für den rechten Scheinwerfer ein begrenzt prädiktiver Schwenkwinkel p_{L} bestimmt und ausgewählt, der gleich der Summe d+aₘₐₓ aus dem dynamischen Schwenkwinkel d und der maximal zulässigen Abweichung aₘₐₓ ist.

Nach dem in der Figur 2 dargestellten Verfahren wird also stets für einen Scheinwerfer SR, SL der dynamische Schwenkwinkel ausgewählt, während für den anderen Scheinwerfer S_{L}, S_{R} entweder der prädiktive Schwenkwinkel p oder der begrenzt prädiktive Schwenkwinkel p_{L} ausgewählt wird.

Nach dem Start des in Fig. 3 dargestellten Verfahrens wird in einem Schritt 11 zunächst geprüft, ob der Betrag |a| der Abweichung a=p-d des prädiktiven Schwenkwinkels p vom dynamischen Schwenkwinkel d kleiner oder gleich eine maximal zulässige Abweichung aₘₐₓ ist. Ist dies der Fall, wird in Schritt 12 für den rechten Scheinwerfer S_{R} und den linken Scheinwerfer S_{L} der prädiktive Schwenkwinkel p als einzustellender Schwenkwinkel ausgewählt. Ist dies nicht der Fall, wird in Schritt 13 geprüft, ob der prädiktive Schwenkwinkel p größer ist als der dynamische Schwenkwinkel. Ist das der Fall, wird in einem Schritt 14 für den rechten Scheinwerfer S_{R} und den linken Scheinwerfer S_{L} ein begrenzt prädiktiver Schwenkwinkel p_{L} bestimmt und ausgewählt, der gleich der Summe d+aₘₐₓ aus dem dynamischen Schwenkwinkel d und der maximal zulässigen Abweichung aₘₐₓ ist. Ergibt sich nach Prüfung in Schritt 13, dass der prädiktive Schwenkwinkel p kleiner oder gleich dem dynamische Schwenkwinkel d ist, wird in einem Schritt 15 für den rechten Scheinwerfer S_{R} und den linken Scheinwerfer S_{L} ein begrenzt prädiktiver Schwenkwinkel p_{L} bestimmt und ausgewählt, der gleich der Differenz d-aₘₐₓ aus dem dynamischen Schwenkwinkel d und der maximal zulässigen Abweichung aₘₐₓ ist.

Die vorangehenden Ausführungen der vorliegenden Erfindung sind lediglich beispielhaft und nicht als die vorliegende Erfindung einschränkend auszulegen. Die vorliegende Erfindungslehre kann leicht auf andere Anwendungen übertragen werden. Die Beschreibung der Ausführungsbeispiele ist zur Veranschaulichung vorgesehen und nicht, um den Schutzbereich der Patentansprüche einzuschränken. Viele Alternativen, Modifikationen und Varianten sind für einen durchschnittlichen Fachmann offensichtlich, ohne dass er hierfür den Schutzumfang der vorliegenden Erfindung verlassen müsste, der in den nachfolgenden Ansprüchen definiert ist.

### Bezugszeichenliste

- F: Fahrzeug
- S_{R}: rechter Scheinwerfer
- S_{L}: linker Scheinwerfer
- S: Sensoren
- V: erfindungsgemäße Vorrichtung
- EC: Steuergeräte
- K: Kamerasystem
- I: Schnittstelle
- C: Steuerungsmittel
- D: Mittel zum Wandeln

## Patentansprüche

1. Vorrichtung zur Ermittelung von Führungsgrößen zur Anpassung der Lichtverteilung eines rechten Scheinwerfers (S_{R}) und/oder eines linken Scheinwerfers (S_{L}) eines Fahrzeugs (F) bei Kurvenfahrten, wobei die Führungsgrößen aus einem ersten Winkel gegenüber einer Fahrzeuglängsachse und/oder einem zweiten Winkel gegenüber der Fahrzeuglängsachse des Fahrzeugs (F) ermittelbar sind, der erste Winkel aus ersten Informationen, ermittelbar ist und der zweite Winkel aus zweiten Informationen ermittelbar ist
- mit wenigstens einer Schnittstelle (I) zum Einlesen der ersten Informationen, nämlich von Messwerten und/oder mittels Aktoren des Fahrzeugs (F) einzustellender Größen, wie zum Beispiel der Geschwindigkeit, des Lenkwinkels, der Gierrate, des Einschlagswinkels der Vorderräder, der Entfernung zu einem vorausfahrenden und/oder entgegenkommenden Fahrzeug, und zum Einlesen der zweiten Informationen über einen vor dem Fahrzeug (F) liegenden Straßenverlauf, wie zum Beispiel der Radius der gerade durchfahrenen Kurve, der Entfernung zu einem markanten Punkt des Straßenverlaufs wie einem Kurvenanfangspunkt, einem Kurvenendpunkt, einem Kurvenwendepunkt, dem Beginn oder Ende einer Straße, eines Ausbauabschnittes einer Straße, einer Autobahn, einer innerörtlichen oder außerörtlichen Straße,
- mit einem Steuerungsmittel (C) zum Ermitteln des ersten Winkels (d) aus den ersten Informationen und des zweiten Winkels (p) aus den zweiten Informationen,
- wobei mit dem Steuerungsmittel für jeden der Scheinwerfer (S_{R}, S_{L}) einer der Winkel (d, p) auswählbar ist,
- mit einer Schnittstelle (I) zur Verbindung der Vorrichtung mit Aktoren zum Anpassen der Lichtverteilung der Scheinwerfer (S_{R}, S_{L}) oder von Teilen der Scheinwerfer (S_{R}, S_{L}), an welcher Führungsgrößensignale bereitstellbar sind,
- mit einem Mittel (D) zum Wandeln des vom Steuerungsmittel (C) für den rechten Scheinwerfer (S_{R}) ausgewählten Winkels (d, p) und des vom Steuerungsmittel (C) für den linken Scheinwerfer (S_{L}) ausgewählten Winkels (d, p) in die Führungsgrößensignale,
**dadurch gekennzeichnet,**
**dass** mittels des Steuerungsmittels (C) der zweite Winkel (p) auf einen begrenzten zweiten Winkel (p_{L}) begrenzbar ist, wenn ein Betrag (|a|) einer Abweichung (a=p-d) zwischen dem zweiten Winkel (p) und dem ersten Winkel (d) größer ist als eine maximal zulässige Abweichung (amax).

2. Vorrichtung nach Anspruch 1, **dadurch gekennzeichnet, dass** der begrenzte zweite Winkel (p_{L}) dem ersten Winkel (d) zuzüglich der maximal zulässigen Abweichung (aₘₐₓ) entspricht, wenn der zweite Winkel (p) größer ist als der erste Winkel (d).

3. Vorrichtung nach Anspruch 1, **dadurch gekennzeichnet, dass** der begrenzte zweite Winkel (p_{L}) dem ersten Winkel (d) abzüglich der maximal zulässigen Abweichung (aₘₐₓ) entspricht, wenn der zweite Winkel (p) kleiner ist als der erste Winkel (d).

4. Vorrichtung nach einem der Ansprüche 1 bis 3, **dadurch gekennzeichnet, dass** die maximale zulässige Abweichung (aₘₐₓ) abhängig von ersten Informationen und/oder zweiten Informationen ist.

5. Vorrichtung nach einem der Ansprüche 1 bis 4, **dadurch gekennzeichnet, dass** mittels des Steuerungsmittels (C) für den rechten und den linken Scheinwerfer (S_{R}, S_{L}) der zweite Winkel (p) bzw. im Falle einer Begrenzung des zweiten Winkels (p) der begrenzte zweite Winkel (p_{L}) auswählbar ist.

6. Vorrichtung nach einem der Ansprüche 1 bis 4, **dadurch gekennzeichnet, dass** mittels des Steuerungsmittels (C) für den rechten Scheinwerfer (S_{R}) der erste Winkel(d) und für den linken Scheinwerfer (S_{L}) der zweite Winkel (p) bzw. im Falle einer Begrenzung des zweiten Winkels (p) der begrenzte zweite Winkel (p_{L}) auswählbar ist, wenn der zweite Winkel (p) kleiner ist als der erste Winkel (d).

7. Vorrichtung nach einem der Ansprüche 1 bis 4 oder nach Anspruch 6, **dadurch gekennzeichnet, dass** mittels des Steuerungsmittels (C) für den linken Scheinwerfer (S_{L}) der erste Winkel (d) und für den rechten Scheinwerfer (S_{R}) der zweite Winkel (p) bzw. im Falle einer Begrenzung des zweiten Winkels (p) der begrenzte zweite Winkel (p_{L}) auswählbar ist, wenn der zweite Winkel (p) größer ist als der erste Winkel (d).

8. Vorrichtung nach Anspruch 6 oder 7, **dadurch gekennzeichnet, dass** mittels des Steuerungsmittels zwischen der Auswahl des ersten Winkels (d) für einen der Scheinwerfer und der Auswahl des zweiten Winkels (p) bzw. begrenzt zweiten Winkels (p_{L}) wechselbar ist, wenn der erste Winkel (d) gleich dem zweiten Winkel (p) ist.

9. Verfahren zur Ermittelung von Führungsgrößen zur Anpassung der Lichtverteilung eines rechten Scheinwerfers (S_{R}) und/oder eines linken Scheinwerfers (S_{L}) eines Fahrzeugs (F) bei Kurvenfahrten, wobei die Führungsgrößen aus einem ersten Winkel gegenüber einer Fahrzeuglängsachse und/oder einem zweiten Winkel gegenüber der Fahrzeuglängsachse des Fahrzeugs (F) ermittelt werden, der erste Winkel aus ersten Informationen ermittelt wird und der zweite Winkel aus zweiten Informationen ermittelt wird wobei
- die erste Informationen Messwerten und/oder mittels Aktoren des Fahrzeugs (F) einzustellender Größen, wie zum Beispiel der Geschwindigkeit, des Lenkwinkels, der Gierrate, des Einschlagswinkels der Vorderräder sind und ermittelt werden,
- die zweite Informationen Informationen über einen vor dem Fahrzeug (F) liegenden Straßenverlauf, wie zum Beispiel der Radius der gerade durchfahrenen Kurve, der Entfernung zu einem markanten Punkt des Straßenverlaufs wie einem Kurvenanfangspunkt, einem Kurvenendpunkt, einem Kurvenwendepunkt, dem Beginn oder Ende einer Straße, eines Ausbauabschnittes einer Straße, einer Autobahn, einer innerörtlichen oder außerörtlichen Straße, sind und ermittelt werden,
- ein erster Winkel (d) aus den ersten Informationen und ein zweiter Winkel (p) aus den zweiten Informationen ermittelt werden,
- für jeden der Scheinwerfer (S_{R}, S_{L}) einer der Winkel (d, p) ausgewählt wird,
- der für den rechten Scheinwerfer (S_{R}) ausgewählte Winkel (d, p) und der für den linken Scheinwerfer (S_{L}) ausgewählte Winkel (d, p) in Führungsgrößensignale gewandelt werden,
**gekennzeichnet dadurch,**
**dass** der zweite Winkel (p) auf einen begrenzten zweiten Winkel (p_{L}) begrenzt wird, wenn ein zweiter Winkel ausgewählt ist und wenn ein Betrag (|a|) einer Abweichung (a=p-d) zwischen dem zweiten Winkel (p) und dem ersten Winkel (d) größer ist als eine maximal zulässige Abweichung (amax).

10. Computerprogramm mit Programmcodemitteln zur Ausführung des Verfahrens nach Anspruch 9 durch ein Rechnersystem, wenn das Programm durch das Rechnersystem abgearbeitet wird.

11. Computerprogrammprodukt mit Programmcodemitteln, welche in einem computerlesbaren Medium gespeichert sind, um das Verfahren nach Anspruch 9 durchzuführen, wenn das Computerprogrammprodukt auf einem Rechnersystem abgearbeitet wird.

## Claims

1. Apparatus for determining reference variables for adjusting the light distribution of a right headlight (S_{R}) and/or a left headlight (S_{L}) of a vehicle (F) driving in a curve. The reference variables can be determined from a first angle relative to the longitudinal axis and/or a second angle relative to the longitudinal axis of the vehicle (F); the first angle can be determined from the first pieces of information and the second angle can be determined from the second piece of information
- With at least one interface (I) for reading in the first pieces of information, namely, from measured values and/or variables to be set by actuators of the vehicle (F), such as the speed, steering angle, yaw rate, steering lock angle of the front wheels, distance from a vehicle traveling in front of the vehicle in the same direction and/or approaching it, and for reading in the second pieces of information about the course of the road ahead of the vehicle (F), such as the radius of the curve that is being driven through, the distance away from a prominent point of the road's course such as the starting point, ending point or inflection point of a curve, the beginning, end or section of a road, road extension, highway, downtown road or suburban road,
- With a control system (C) for determining the first angle (d) from the first pieces of information and the second angle (p) from the second pieces of information,
- The control system can be used to select the one of the angles (d, p) for each of the headlights (S_{R}, S_{L}),
- With an interface (I) for connecting the apparatus with actuators for adjusting the light distribution of the headlights (S_{R}, S_{L}) or parts of the headlights (S_{R}, S_{L}), on which reference variable signals can be provided,
- With a device (D) for converting the angle (d, p) selected by the control system (C) for the right headlight (S_{R}) and the angle (d, p) selected by the control system (C) for the left headlight (S_{L}) into the reference variable signals,
**Indicated by**
The ability to use the control system (C) to limit the second angle (p) to a limited second angle (p_{L}) if an amount (|a|) of a deviation (a=p-d) between the second angle (p) and the first angle (d) is greater than a maximum permitted deviation (aₘₐₓ).

2. Apparatus in accordance with Claim 1, indicated by the limited second angle (p_{L}) corresponding to the first angle (d) plus the maximum permitted deviation (aₘₐₓ) if the second angle (p) is greater than the first angle (d).

3. Apparatus in accordance with Claim 1, indicated by the limited second angle (p_{L}) corresponding to the first angle (d) minus the maximum permitted deviation (aₘₐₓ) if the second angle (p) is less than the first angle (d).

4. Apparatus in accordance with one of Claims 1 to 3, indicated by the maximum permitted deviation (aₘₐₓ) being dependent on the first pieces of information and/or second pieces of information.

5. Apparatus in accordance with one of Claims 1 to 4, indicated by the ability to use the control system (C) to select the second angle (p) or, in the event of limitation of the second angle (p), of the limited second angle (p_{L}) for the right and left headlights (S_{R}, S_{L}).

6. Apparatus in accordance with one of Claims 1 to 4, indicated by the ability to use the control system (C) to select the first angle (d) for the right headlight (S_{R}) and the second angle (p) or, in the event of limitation of the second angle (p), the limited second angle (p_{L}) for the left headlight (S_{L}) if the second angle (p) is less than the first angle (d).

7. Apparatus in accordance with one of Claims 1 to 4 or Claim 6, indicated by the ability to use the control system (C) to select the first angle (d) for the left headlight (S_{L}) and the second angle (p) or, in the event of limitation of the second angle (p), the limited second angle (p_{L}) for the right headlight (S_{R}) if the second angle (p) is greater than the first angle (d).

8. Apparatus in accordance with Claim 6 or 7, indicated by the ability to use the control system to switch between selection of the first angle (d) for one of the headlights and selection of the second angle (p) or limited second angle (p_{L}) if the first angle (d) is equal to the second angle (p).

9. Method for determining reference variables for adjusting the light distribution of a right headlight (S_{R}) and/or a left headlight (S_{L}) of a vehicle (F) driving in a curve. The reference variables are determined from a first angle relative to the longitudinal axis and/or a second angle relative to the longitudinal axis of the vehicle (F); the first angle is determined from the first pieces of information and the second angle is determined from the second information;
- The first information consists of measured values and/or variables to be set by actuators of the vehicle (F), such as the speed, steering angle, yaw rate, steering lock angle of the front wheels, and is determined,
- The second information consists of information about the course of the road ahead of the vehicle (F), such as the radius of the curve that is being driven through, the distance away from a prominent point of the road's course such as the starting point, ending point or inflection point of a curve, the beginning, end or section of a road, road extension, highway, downtown road or suburban road, and is determined,
- A first angle (d) is determined from the first pieces of information and a second angle (p) is determined from the second information,
- One of the angles (d, p) is selected for each of the headlights (S_{R}, S_{L}),
- The angle (d, p) selected for the right headlight (S_{R}) and the angle (d, p) selected for the left headlight (S_{L}) are converted into reference variable signals,
**Indicated by**
The second angle (p) being limited to a limited second angle (p_{L}) if a second angle is selected and if an amount (|a|) of a deviation (a=p-d) between the second angle (p) and the first angle (d) is greater than a maximum permitted deviation (aₘₐₓ).

10. A computer program with codes for having a computer system execute the method in accordance with Claim 9 if the program is processed by the computer system.

11. A computer program product with codes that are stored in a medium that can be read by a computer, to execute the method in accordance with Claim 9 if the computer program product is processed on a computer system.

## Revendications

1. Dispositif pour déterminer des variables de référence pour adapter la répartition lumineuse d'un projecteur droit (S_{R}) et/ou d'un projecteur gauche (S_{L}) d'un véhicule (F) dans les virages, les variables de référence pouvant être déterminées d'un premier angle par rapport à un axe longitudinal véhicule et/ou d'un deuxième angle par rapport à l'axe longitudinal véhicule du véhicule (F), le premier angle pouvant être déterminé à l'aide de premières informations et le deuxième angle pouvant être déterminé à l'aide de deuxièmes informations et
- avec au moins une interface (I) permettant la lecture des premières informations, à savoir des valeurs mesurées et/ou des valeurs à ajuster au moyen des actionneurs du véhicule (F), comme par exemple la vitesse, l'angle de direction, le taux de lacet, l'angle de braquage des roues avant, la distance à un véhicule qui précède et/ou venant en sens inverse et permettant la lecture des deuxièmes informations sur le tracé de route devant le véhicule (F) comme par exemple le rayon du virage juste parcouru, la distance à un point marquant du tracé de route comme un point de départ du virage, un point final du virage, un point tournant du virage, le début ou la fin d'une route, d'une section aménagée d'une route, d'une autoroute, d'une route en ville ou hors ville,
- avec un moyen de commande (C) permettant de déterminer le premier angle (d) au travers les premières informations et le deuxième angle (p) au travers les deuxièmes informations,
- un des angles (d, p) pouvant être choisi à l'aide du moyen de commande pour chacun des projecteurs (S_{R}, S_{L}),
- avec une interface (I) permettant la liaison du dispositif avec des actionneurs pour adapter la répartition lumineuse des projecteurs (S_{R}, S_{L}) ou des parties des projecteurs (S_{R}, S_{L}) sur laquelle des signaux de variables de référence peuvent être mis à disposition,
- avec un moyen (D) pour convertir l'angle (d, p) choisi par le moyen de commande (C) pour le projecteur droit (S_{R}) et l'angle (d, p) choisi par le moyen de commande (C) pour le projecteur gauche (S_{L}) en signaux de variables de référence,
**caractérisé en ce qu'**
à l'aide du moyen de commande (C) le deuxième angle (p) peut être limité à un deuxième angle limité (p_{L}) lorsqu'une quantité (|a|) d'une variation (a = p-d) entre le deuxième angle (p) et du premier angle (d) est supérieure à la variation maximale admissible (a_{max.}).

2. Dispositif selon la revendication 1,
**caractérisé en ce que** le deuxième angle limité (p_{L}) correspond au premier angle (d) plus la variation maximale admissible (a_{max.}) lorsque le deuxième angle (p) est supérieur au premier angle (d).

3. Dispositif selon la revendication 1,
**caractérisé en ce que** le deuxième angle limité (p_{L}) correspond au premier angle (d) moins la variation maximale admissible (a_{max.}) lorsque le deuxième angle (p) est inférieur au premier angle (d).

4. Dispositif selon l'une des revendications 1 à 3,
**caractérisé en ce que** la variation maximale admissible (a_{max.}) dépend des premiers informations et/ou des deuxièmes informations.

5. Dispositif selon l'une des revendications 1 à 4,
**caractérisé en ce qu'**à l'aide du moyen de commande (C) pour le projecteur droit et le projecteur gauche (S_{R}, S_{L}) le deuxième angle (p) ou bien dans le cas d'une limitation du deuxième angle (p), le deuxième angle limité (p_{L}) peut être choisi.

6. Dispositif selon l'une des revendications 1 à 4,
**caractérisé en ce qu'**à l'aide du moyen de commande (C) pour le projecteur droit (S_{R}) le premier angle (d) et pour le projecteur gauche (S_{L}) le deuxième angle (p) ou bien dans le cas d'une limitation du deuxième angle (p), le deuxième angle limité (p_{L}) peut être choisi lorsque le deuxième angle (p) est inférieur au premier angle (d).

7. Dispositif selon l'une des revendications 1 à 4 ou selon la revendication 6, **caractérisé en ce qu'**à l'aide du moyen de commande (C) pour le projecteur gauche (S_{L}) le premier angle (d) et pour le projecteur droit (S_{R}) le deuxième angle (p) ou bien dans le cas d'une limitation du deuxième angle (p), le deuxième angle limité (p_{L}) peut être choisi lorsque le deuxième angle (p) est supérieur au premier angle (d).

8. Dispositif selon la revendication 6 ou 7,
**caractérisé en ce qu'**à l'aide du moyen de commande le choix entre le premier angle (d) pour un des projecteurs et le choix du deuxième angle (p) respectivement le deuxième angle limité (p_{L}) est échangeable lorsque le premier angle (d) est identique au deuxième angle (p).

9. Procédé pour déterminer des variables de référence pour adapter la répartition lumineuse d'un projecteur droit (S_{R}) et/ou d'un projecteur gauche (S_{L}) d'un véhicule (F) dans les virages, les variables de référence étant déterminées d'un premier angle par rapport à un axe longitudinal véhicule et/ou d'un deuxième angle par rapport à l'axe longitudinal véhicule du véhicule (F), le premier angle étant déterminé à l'aide de premières informations et le deuxième angle étant déterminé à l'aide de deuxièmes informations,
- les premières informations étant des valeurs mesurées et/ou des valeurs à ajuster au moyen des actionneurs du véhicule (F) déterminées comme par exemple la vitesse, l'angle de direction, le taux de lacet, l'angle de braquage des roues avant,
- les deuxièmes informations étant et étant déterminées des informations sur le tracé de route devant le véhicule (F), comme par exemple le rayon du virage juste parcouru, la distance à un point marquant du tracé de route comme un point de départ du virage, un point final du virage, un point tournant du virage, le début ou la fin d'une route, d'une section aménagée d'une route, d'une autoroute, d'une route en ville ou hors ville,
- un premier angle (d) étant déterminé au travers les premières informations et un deuxième angle (p) étant déterminé au travers les deuxièmes informations,
- un des angles (d, p) étant choisi pour chacun des projecteurs (S_{R}, S_{L}),
- l'angle (d, p) choisi pour le projecteur droit (S_{R}) et l'angle (d, p) choisi pour le projecteur gauche (S_{L}) étant convertis aux signaux de variables de référence,
**caractérisé en ce que**
le deuxième angle (p) est limité à un deuxième angle limité (p_{L}) lorsqu'un deuxième angle est choisi et lorsqu'une quantité (|a|) d'une variation (a = p-d) entre le deuxième angle (p) et du premier angle (d) est supérieure à la variation maximale admissible (a_{max.}).

10. Programme informatique avec des moyens code informatique pour l'exécution du procédé selon la revendication 9 à l'aide d'un système informatique lorsque le programme est exécuté par le système informatique.

11. Produit programme informatique avec des moyens code informatique qui sont mémorisés sur un support lisible par ordinateur pour réaliser le procédé selon la revendication 9 lorsque le produit programme informatique est exécuté sur un système informatique.
